(19) Europäisches Patentamt
European Patent Office
Office européen des brevets

(11) Veröffentlichungsnummer: **0 257 299 B1**

(12) **EUROPÄISCHE PATENTSCHRIFT**

(45) Veröffentlichungstag der Patentschrift: **06.05.92**

(51) Int. Cl.⁵: **A61G 12/00**, A61G 13/00

(21) Anmeldenummer: **87110524.3**

(22) Anmeldetag: **21.07.87**

(54) **Deckenstativ.**

(30) Priorität: **13.08.86 DE 3627517**

(43) Veröffentlichungstag der Anmeldung:
**02.03.88 Patentblatt 88/09**

(45) Bekanntmachung des Hinweises auf die
Patenterteilung:
**06.05.92 Patentblatt 92/19**

(84) Benannte Vertragsstaaten:
**AT BE CH DE FR GB IT LI NL**

(56) Entgegenhaltungen:
**DE-A- 3 100 819**
**FR-A- 1 136 512**
**FR-A- 1 467 120**

(73) Patentinhaber: **Kreuzer GmbH + Co. OHG**
**Benzstrasse 26**
**W-8039 Puchheim(DE)**

(72) Erfinder: **Kreuzer GmbH + Co. OHG**
**Benzstrasse 26**
**W-8039 Puchheim(DE)**

(74) Vertreter: **Prüfer, Lutz H., Dipl.-Phys.**
**Harthauser Strasse 25d**
**W-8000 München 90(DE)**

**Beschreibung**

Die Erfindung betrifft ein Deckenstativ nach dem Oberbegriff des Patentanspruches 1. Derartige Deckenstative werden insbesondere für Intensivpflegestationen, Operationssäle und ähnliches verwendet.

Ein Deckenstativ nach dem Oberbegriff des Patentanspruches 1 ist aus der DE-GM 76 27 083 bekannt. Bei einem solchen Stativ ist es nicht möglich, einen der Arme unter dem anderen Arm hindurchzuschwenken. Dadurch ist die Einsetzbarkeit beschränkt.

Aus dem Prospekt "HANAULUX-Operationsleuchten mit Versorgungs-und Tragarmen" der Firma Heraeus, Hanau, Bundesrepublik Deutschland, 1985, ist ein Deckenstativ bekannt, bei dem die Drehachsen von drei Stativarmen koaxial zueinander angeordnet und mit einem Basisteil drehbar gegen dieses verbunden sind. Da zugeführte Versorgungsleitungen wie beispielsweise Lichtkabel durch das Basisteil koaxial in die Verbindungsteile der Stativarme hineingeführt werden, ist es erforderlich, daß in der koaxialen Führung in Umfangsrichtung Schlitze vorgesehen sind, damit ein Schwenken der Arme um die gemeinsame Drehachse möglich wird. Selbstverständlich kann ein solcher Schlitz sich nur über einen kleinen Winkel in Umfangsrichtung erstrecken. Das hat zur Folge, daß einerseits die Stabilität gemindert und andererseits der Schwenkwinkel sehr eingeschränkt ist.

Aus dem Prospekt der Firma Dräger, Lübeck, Juni 1986 "Ergonomische Intensiv-Station" ist ein Intensivpflegedeckensystem bekannt, bei dem über dem Patientenbett und quer zu diese eine Schiene angeordnet ist, an der eine Pflegeeinheit und eine Geräteeinheit angehängt sind. Die beiden Einheiten sind innerhalb eines bestimmten Bereiches an der Schiene und relativ zueinander hin und her bewegbar. Da die beiden Einheiten an der Schiene zwangsgeführt sind, können sie nicht aneinander vorbei bewegt werden. Ferner müßten sie zu diesem Zweck auch über den Patienten hinweg bewegt werden, was unerwünscht ist, denn man will die doch relativ schweren Einheiten nicht über den Kopf des Patienten fahren.

Aufgabe der Erfindung ist es, ein Deckenstativ der eingangs beschriebenen Art zu schaffen, welches gegenüber den bekannten Einrichtungen verbessert ist. Insbesondere soll ein großer Schwenkbereich beider Stativarme und damit der Geräte ermöglicht werden, ohne daß dadurch die Aufhängung geschwächt werden würde.

Diese Aufgabe wird durch ein Deckenstativ der eingangs beschriebenen Art mit den Merkmalen des kennzeichnenden Teiles des Patentanspruches 1 gelöst.

Weiterbildungen der Erfindung sind in den Unteransprüchen gekennzeichnet.

Weitere Merkmale und Zweckmäßigkeiten der Erfindung ergeben sich aus der Beschreibung eines Ausführungsbeispieles anhand der Figuren. Von den Figuren zeigen:

Fig. 1 eine Gesamtdarstellung eines Deckenstatives mit zwei Stativarmen mit Geräten einer Intensivstation über einem Patientenbett und

Fig. 2 eine Detaildarstellung des Stativfußes, teilweise in geschnittener Darstellung und in vergrößertem Maßstab.

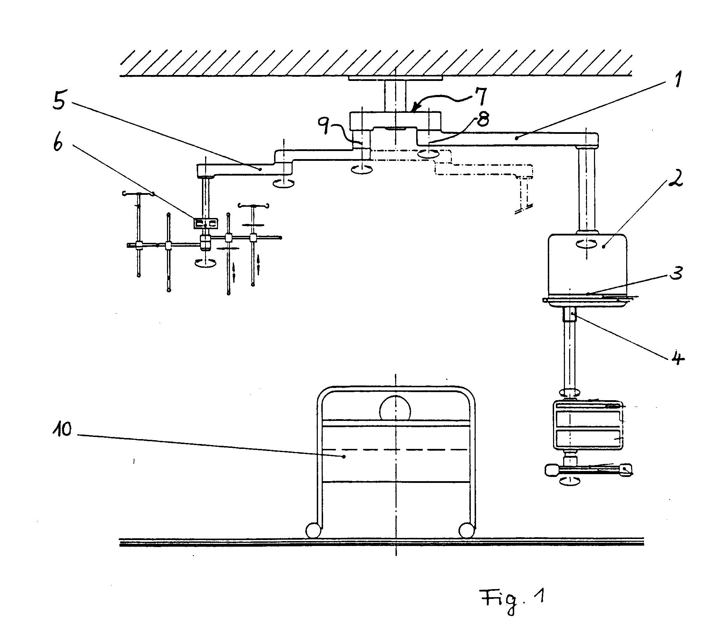

Das in Figur 1 gezeigte Intensivpflege-Deckensystem umfaßt einen ersten Stativarm 1 mit einem Stativkopf 2 mit eingebauten Benutzerteilen wie Gasteil, Stark- und Schwachstromteil, einer Geräteplattform 3 sowie weiteren über ein Kupplungsstück 4 angehängten Teilen. Ferner ist ein zweiter Stativarm 5 vorgesehen, an dem z.B. ein Netzverteiler 6 mit Anschlußdosen und Potentialausgleichstiften vorgesehen ist. Die beiden Stativarme sind symmetrisch an einem Basisteil 7 befestigt und un jeweilige Drehachsen 8, 9 schwenk- bzw. drehbar angeordnet. Das Basisteil 7 ist über der Symmetrielinie eines Patientenbettes 10 angeordnet.

Das Deckenstativ 11 weist ein Basisteil 7 auf. Dieses ist mit einer an einer Rohdecke 13 befestigten Deckenankerplatte 14 verbunden. Zu diesem Zweck sind an der Deckenankerplatte 14 selbst zunächst Distanzstücke 15 vorgesehen, an denen eine gemeinsame Deckensäule 16 des Statives angeschraubt ist. Die Deckensäule 16 umfaßt einen dem Basisteil 7 zugewandten ersten Abschnitt 17 und einen damit über ein Drehlager 29 verbundenen zweiten Abschnitt 18. Der erste Abschnitt ist fest mit dem übrigen Basisteil verbunden, während der zweite Abschnitt fest mit den Distanzstücken verschraubt ist. Das Drehlager weist einen Anschlag auf, so daß eine Drehung des Basisteiles 7 um die Drehachse 19 der Deckensäule um einen vorgegebenen Winkel von höchstens annähernd 360° möglich ist.

Das Basisteil 7 weist in einem Abstand von der Drehachse 19 einen ersten Ansatz 20 auf, der eine sich senkrecht zu der Drehachse 19 erstreckende Anschlußfläche 21 besitzt, an der der mit dem Ansatz zu verbindende erste Stativarm 1 anliegt.

In einem Abstand von dem ersten Ansatz 20 und vorzugsweise symmetrisch zur Drehachse 19 ist ein zweiter Ansatz 22 vorgesehen. Dieser weist ebenfalls eine sich senkrecht zur Drehachse 19 erstreckende Anschlußfläche 23 auf, die dem daran angeschlossenen zweiten Stativarm 5 gegenüberliegt.

Die beiden Stativarme sind jeweils durch entsprechende Drehgelenke mit den Ansätzen 20, 22 und damit mit dem Basisteil 7 dreh-bzw. schwenkbar verbunden.

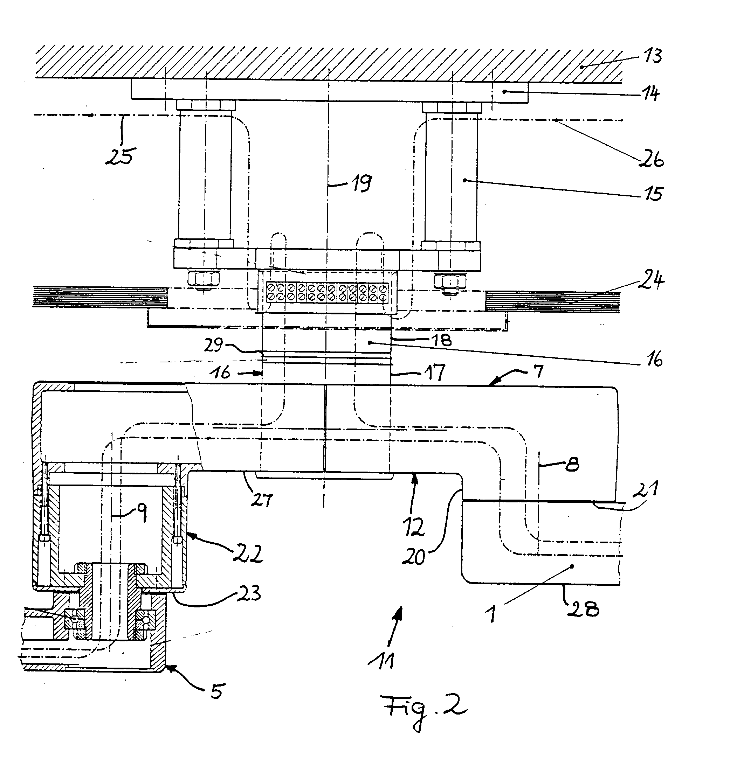

Wie insbesondere in Figur 2 gezeigt ist, sind die Deckensäule 16, der sich daran anschließende Querteil 12 des Basisteiles 7, die beiden Ansätze 20 und 22 und die mit diesen verbundenen Stativarme 1, 5 jeweils hohl ausgebildet, so daß Versorgungsleitungen wie elektrische Zuführungen 25, Leitungen für Gase 26 und ähnliches aus einem Zwischenraum zwischen der Rohdecke 13 und einer Zwischendecke 24 durch das Innere der Deckensäule 16 hindurch in das Basisteil 7, zu den jeweiligen Ansätzen 20, 22 und durch diese hindurch in die Stativarme 1, 5 geführt werden können.

Der erste Ansatz 20 für den ersten Stativarm 1 ist in der aus den Figuren ersichtlichen Weise so kurz ausgebildet, daß der Stativarm beim Schwenken gerade einen ausreichenden Abstand von dem Basisteil hat und nicht an diesem entlang schleift. Der Stativarm ist um einen großen Winkel von nahezu 340° schwenkbar, ohne an den zweiten Ansatz 22 anzuschlagen. Das Drehgelenk weist nichtgezeigte Anschläge auf, durch die die Schwenkbewegung so begrenzt wird, daß ein Anschlagen des ersten Stativarmes an dem Ansatz 22 vermieden wird. Sowohl der Ansatz als auch der Stativarm sind durch die zentrale Führung der Leitung in ihrer Wandung ungeschwächt, so daß für diesen Stativarm sowohl eine große Stabilität als auch ein großer Schwenkbereich erreicht wird.

Der zweite Ansatz 22 ist, wie aus den Figuren ersichtlich ist, in Richtung der Drehachse so lang gewählt, daß der Abstand der Anschlußfläche 23 von der den Stativarmen zugewandten Grundfläche 27 des Basisteiles 7 größer ist als der Abstand der unteren Aussenfläche 28 des ersten Stativarmes von der Grundfläche 27. Der Abstand ist derart größer gewählt, daß der zweite Stativarm 5 gewünschtenfalls um 360° um die Drehachse 9 schwenkbar ist, ohne daß er dabei mit dem ersten Stativarm 1 in Kontakt gelangt. Da auch bei dem zweiten Stativarm die Wandungen von dem Ansatz 22, dem Drehlager und dem Stativarm selbst ungeschlitzt bleiben, bleibt somit die Stabilität erhalten, und es wird eine große Schwenk- bzw. Drehbarkeit erreicht. Gewünschtenfalls kann ein Anschlag vorgesehen sein, der ein Drehen um mehr als 360° oder einen anderen vorgegebenen Winkel verhindert.

**Patentansprüche**

1. Deckenstativ mit einem mit einer Decke (13) zu verbindenden Basisteil (7) und einem an einer ersten Verbindungsstelle mit diesem über einen ersten Ansatz (20) gelenkig verbundenen ersten Stativarm (1) zur Aufnahme von zu tragenden Einrichtungen und einem an einer gegen die erste Verbindungsstelle versetzten Verbindungsstelle mit dem Basisteil (7) über einen zweiten Ansatz (22) gelenkig verbundenen zweiten Stativarm (5) zur Aufnahme von zu tragenden Einrichtungen sowie mit durch das Basisteilinnere über die getrennten Verbindungsstellen dem jeweiligen Stativarm zugeführten Versorgungsleitungen (25, 26) zum Verbinden mit den zu tragenden Einrichtungen, dadurch gekennzeichnet, daß die Länge des zweiten Ansatzes (22) und die Länge des zweiten Stativarms so gewählt sind, daß der zweite Stativarm (5) beim Schwenken um seine Drehachse (9) nicht mit dem ersten Stativarm (1) in Berührung gelangt.

2. Deckenstativ nach Anspruch 1, dadurch gekennzeichnet, daß die Länge des zweiten Ansatzes (22) in Richtung der Drehachse (9) gesehen größer ist als die Länge des ersten Ansatzes (20) zuzüglich der sich in dieser Richtung erstreckenden Höhe des ersten Stativarmes (1).

3. Deckenstativ nach Anspruch 1 oder 2, dadurch gekennzeichnet, daß das Basisteil (7) eine mit einer deckenseitigen Verankerung (14) verbindbare gemeinsame Deckensäule (16) aufweist.

4. Deckenstativ nach Anspruch 3, dadurch gekennzeichnet, daß die Deckensäule (16) einen dem Basisteil (7) zugewandten ersten Abschnitt (17) und einen über ein Drehlager (29) mit diesem verbundenen zweiten Abschnitt (18), welcher mit der Verankerung (14) verbindbar ist, aufweist.

**Claims**

1. A ceiling mount with a base part (7) to be connected to a ceiling (13), and a first mount arm (1) articulated to said base part via a first projection (20) for receiving appliances to be carried, and a second mount arm (5) articulated at a connecting point offset with respect to the first connecting point to the base part (7) via a second projection (22) for receiving appliances to be carried, as well as with supply lines (25, 26) carried through the inside of the base part via the separate connecting points to the respective mount arm for connection to the appliances to be carried, characterized in that the length of the second projection (22) and the length of the second mount arm are chosen in such a way that, while being turned round its axis of rotation (9), the second mount arm (5) does not come into contact with the first mount arm (1).

2. A ceiling mount according to claim 1, characterized in that the length of the second projection (22), viewed in the direction of the axis of rotation (9) is greater than the length of the first projection (20) plus the height extending in that direction of the first mount arm (1).

3. A ceiling mount according to claim 1 or 2, characterized in that the base part (7) has a common ceiling column (16) connectable to an anchorage (14) on the ceiling side.

4. A ceiling mount according to claim 3, characterized in that the ceiling column (16) has a first section (17) facing the base part (7) and a second section (18) connected thereto via a pivot bearing (29), which second section can be connected to the anchorage (14).

**Revendications**

1. Statif de plafond comprenant un élément de base (7) destiné à être fixé à un plafond (13), un premier bras de statif (1) articulé à cet élément de base, dans une première zone de liaison, par l'intermédiaire d'un premier bossage (20), et destiné à recevoir des dispositifs à porter, un deuxième bras de statif (5) articulé à l'élément de base (7), dans une zone de liaison décalée par rapport à la première zone de liaison et par l'intermédiaire d'un deuxième bossage (22), et destiné à recevoir des éléments à porter, ainsi que des canalisations d'alimentation (25,26) destinées à être raccordées aux dispositifs à porter et amenées respectivement aux bras de statif respectifs à travers la cavité intérieure de l'élément de base et en passant par des zones de liaison séparées, caractérisé en ce que la longueur du deuxième bossage (22) et la longueur du deuxième bras de statif sont choisies de manière que le deuxième bras de statif (5) n'entre pas en contact avec le premier bras de statif (1) lorsqu'il pivote autour de son axe de rotation (9).

2. Statif de plafond selon la revendication 1, caractérisé en ce que la longueur du deuxième bossage (22), considérée dans une direction parallèle à l'axe de rotation (9), est supérieure à la longueur du premier bossage (20) majorée de la hauteur du premier bras de statif (1), mesurée dans cette direction.

3. Statif de plafond selon la revendication 1 ou 2, caractérisé en ce que l'élément de base (7) présente une colonne de plafond (16) commune, qui peut être assemblée à un ancrage (14) solidaire du plafond.

4. Statif de plafond selon la revendication 3, caractérisé en ce que la colonne de plafond (16) présente un premier segment (17) dirigé vers l'élément de base (7) et un deuxième segment (18) qui peut être assemblé à l'ancrage (14) et qui peut être relié au premier segment par l'intermédiaire d'un palier de rotation (29).

Fig. 1

Fig. 2